# EUROPÄISCHE PATENTSCHRIFT

(11) **EP 0 574 452 B1**
(45) Veröffentlichungstag und Bekanntmachung des Hinweises auf die Patenterteilung: **21.02.1996**
(21) Anmeldenummer: 92905646.3
(22) Anmeldetag: 04.03.1992
(51) Int. Cl.: G01D 5/34, B62D 15/02

(54) **VORRICHTUNG ZUM ERFASSEN VON UNTERSCHIEDLICHEN LENKWINKELN**
DEVICE FOR DECTECTING DIFFERENT STEERING ANGLES
DISPOSITIF POUR LA SAISIE DE DIFFERENTS ANGLES DE DIRECTION

(30) Priorität: 06.03.1991 DE 4107130
(43) Veröffentlichungstag der Anmeldung: 22.12.1993
(73) Patentinhaber: ZF FRIEDRICHSHAFEN Aktiengesellschaft, D-88038 Friedrichshafen (DE)
(72) Erfinder: WILKS, Eberhard, D-8291 Hutthurm (DE); SIGL, Peter, D-8398 Pocking (DE); RITZER, Manfred, D-8391 Thyrnau (DE)
(86) Internationale Anmeldenummer: EP9200486
(87) Internationale Veröffentlichungsnummer: WO9215842

(56) Entgegenhaltungen:
- EP-A- 0 184 997
- EP-A- 0 330 632
- EP-A- 0 384 384
- WO-A-86/01467
- FR-A- 2 435 379
- PATENT ABSTRACTS OF JAPAN vol. 9, no. 334 (P-417)(2057) 27. Dezember 1985 & JP-A-60 158 313

## Beschreibung

Die Erfindung bezieht sich auf eine Vorrichtung mit einem Geber- und Nehmerteil und einer Auswerteeinrichtung zum Erfassen von unterschiedlichen Lenkwinkeln eines angetriebenen Rades einer Achse für ein Kraftfahrzeug.

Aus der EP-B1 0 227 660 ist eine derartige Vorrichtung bekanntgeworden, die zur Betätigung einer Differentialsperre vorgesehen ist, wie sie beispielsweise bei Ackerschleppern oder Baufahrzeugen Verwendung findet.

Die EP-A 0 330 632 beschreibt eine Vorrichtung, bei der ein Lenkwinkel diskontinuierlich oder kontinuierlich erfaßt wird. Bei der kontinuierlichen Erfassung kann die Verwendung eines Potentiometers zu Ungenauigkeiten bzw. Störungen führen. Bei der diskontinuierlich arbeitenden Methode können lediglich Grenzwinkel erfaßt werden.

Bei dem Vorschlag nach der EP-A 0 384 384 werden die Lenkwinkel ebenfalls kontinuierlich erfaßt. Ein gezahntes Geberrad steht mit zwei Sensoren in Wirkverbindung. Der Abstand der Sensoren entspricht der 1,5fachen Teilung der Verzahnung des Geberrades. Diese Anordnung hat zur Folge, daß eine Drehung des Geberrades eine Änderung des Signalpegels zwischen den Zuständen High und Low induziert. Die Änderung der Signalpegel ist um etwa 1/2 Teilung zueinander phasenverschoben. Die aufgenommenen Signale werden einer Auswerteeinrichtung zugeführt, die die Lenkwinkel ihrer Größe und Richtung nach ermittelt. Diese Lösung ist für die Meßwerterfassung im Bereich der Lenkachse nicht vorgesehen und ist für Aufgaben, bei denen eine begrenzte Zahl von Lenkwinkeln erfaßt werden soll, zu aufwendig.

Da die Antriebsvorrichtungen derartiger Kraftfahrzeuge zunehmend komplexer werden, ist es wünschenswert, verschieden große Grenzlenkwinkel eines Rades für jede seiner Lenkrichtungen, ausgehend von der Geradeausfahrtstellung, zu erfassen. Hierin liegt ein Ziel der vorliegenden Erfindung. Ferner soll die Vorrichtung baulich und konstruktiv einfach aufgebaut und den zum Teil widrigen Einsatzbedingungen gewachsen sein.

Die der Erfindung zugrunde liegende Aufgabe wird durch die im kennzeichnenden Teil des Hauptanspruches aufgeführten Maßnahmen gelöst. Die vorgeschlagene Lösung hat insbesondere den Vorteil, daß für jede Lenkrichtung des Rades vorgegebene Lenkwinkel mit einfachen Mitteln exakt erkannt werden können, so daß, je nach den Anforderungen, die die Praxis stellt, beispielsweise nicht nur eine Differentialsperre im Antriebszug des Kraftfahrzeugs lenkwinkelabhängig betätigt werden kann. Beispielsweise ist eine Anordnung denkbar, bei der bei Vorliegen eines ersten (kleinen) Grenzlenkwinkels ein Querdifferential einer Vorderachse zuoder abgeschaltet wird, während bei Erreichen eines weiteren (größeren) Grenzlenkwinkels die Differentialsperre eines Längsdifferentials geschaltet werden kann. Der Fachmann wird das vorgeschlagene Lösungsprinzip auf vergleichbare Problemstellungen analog anwenden.

Mit geringfügigem Mehraufwand bei der Herstellung des Geberteils ist es möglich, daß die Sensoren drei Lenkwinkel für jede Lenkrichtung des Rades erfassen. In diesem Fall weist das Geberteil vier Steuerkanten auf.

Eine einfache Lösung erhält man dann, wenn das Geberteil von einem Achsschenkelbolzen gebildet ist.

Die Anordnung der Sensoren kann in besonders einfacher Weise dadurch erfolgen, daß sie radial zur Drehachse des Achsschenkelbolzens gerichtet verlaufen. Hierzu sind die Sensoren vorzugsweise in einer Ebene benachbart angeordnet und schließen einen Winkel miteinander ein. Sie sind in Bohrungen einer Achsbrücke, beispielsweise durch Einschrauben in ein Gewinde, montiert. Selbstverständlich stehen dem Konstrukteur andere Befestigungsmöglichkeiten zur Verfügung.

Für die Fertigung, aber auch für die Betriebssicherheit der Vorrichtung, ist es vorteilhaft, die Anschlußleitungen der Sensoren in einem gemeinsamen Kanal der Achsbrücke zu führen.

Da die Sensoren von außen zu Wartungs- und Einstellzwecken zugänglich sein müssen, ist es vorteilhaft, sie gegen äußere Einflüsse durch einen lösbaren Verschlußdeckel zu schützen.

Um die Sensoren zusätzlich vor Beschädigung zu schützen, ist es vorteilhaft, sie auf der der Vorwärtsfahrtrichtung abgewandten Seite der Achsbrücke anzuordnen.

Eine bevorzugte Ausführungsform des Geberteils zeichnet sich dadurch aus, daß drei Sektoren vorhanden sind. Hierbei wird der mittlere Sektor - bezogen auf die Neutral- bzw. Geradeausfahrtstellung - durch eine Nut gebildet. Wenn gewünscht wird, daß die Absolutbeträge der Lenkwinkel in der einen oder anderen Lenkrichtung voneinander abweichen sollen, können die Steuerkanten bzw. die Sektoren vorteilhaft so ausgebildet sein, daß die diskreten Lenkwinkel für jede Lenkrichtung des Rades voneinander abweichen. Durch diese Maßnahme kann eine besonders einfache Anpassung an die Lenkgeometrie vorgenommen werden.

Die Erfindung wird anhand der nachfolgenden Beschreibung eines Ausführungsbeispiels näher erläutert. Es zeigen:
- Fig. 1: eine teilweise, stark vereinfachte Draufsicht auf eine Achse eines Kraftfahrzeugs, und zwar im Bereich eines gelenkten Rades;
- Fig. 2: eine Einzelheit der Anordnung nach Fig. 1 im Querschnitt entlang der Linie II - II in Fig. 1;
- Fig. 3: die schematische Abbildung eines Geber- und Nehmerteils in Draufsicht;
- Fig. 4: eine tabellarische Darstellung diskreter Lenkwinkel in Abhängigkeit der möglichen Schaltzustände des Nehmerteils.

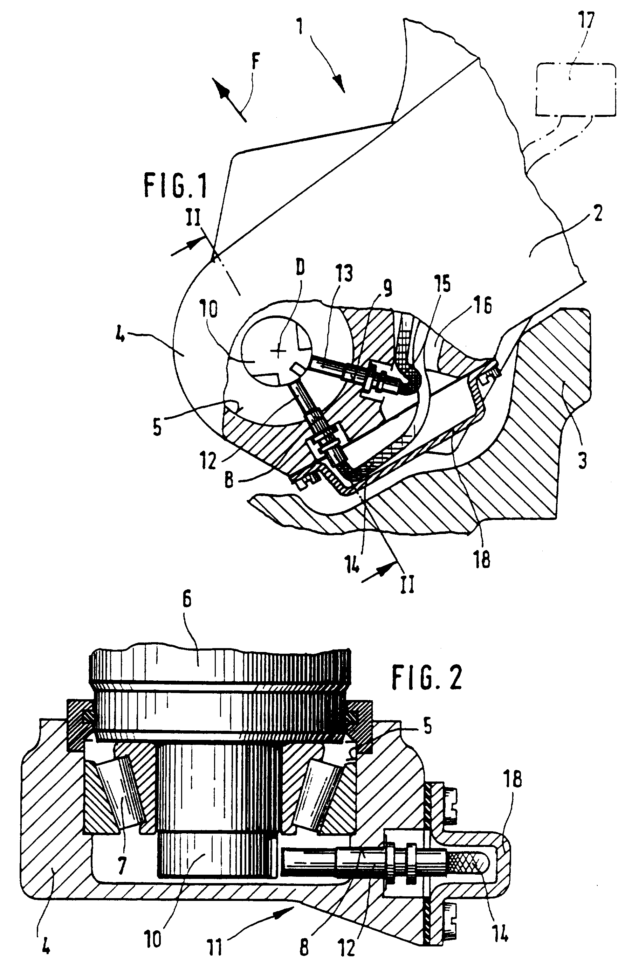

In Fig. 1 ist der linke, äußere Teil einer Achse 1 eines Kraftfahrzeugs, zum Beispiel eines Schleppers, in schematischer, teilweise geschnittener Draufsicht wiedergegeben. Mit dem Pfeil F ist die Fahrtrichtung bezeichnet.

Die Achse 1 besteht aus einer Achsbrücke 2, in der insbesondere eine selbst nicht dargestellte Achshalbwelle gelagert ist. Ein lediglich angedeutetes Gelenkgehäuse 3, an dem das ebenfalls nicht abgebildete Rad drehbar gehaltert ist, ist um eine Drehachse D verschwenkbar angeordnet. Ein Teil des Gelenkgehäuses 3 ist in einer Endlage abgebildet, die einer Linkskurve mit kleinstem Wenderadius entspricht.

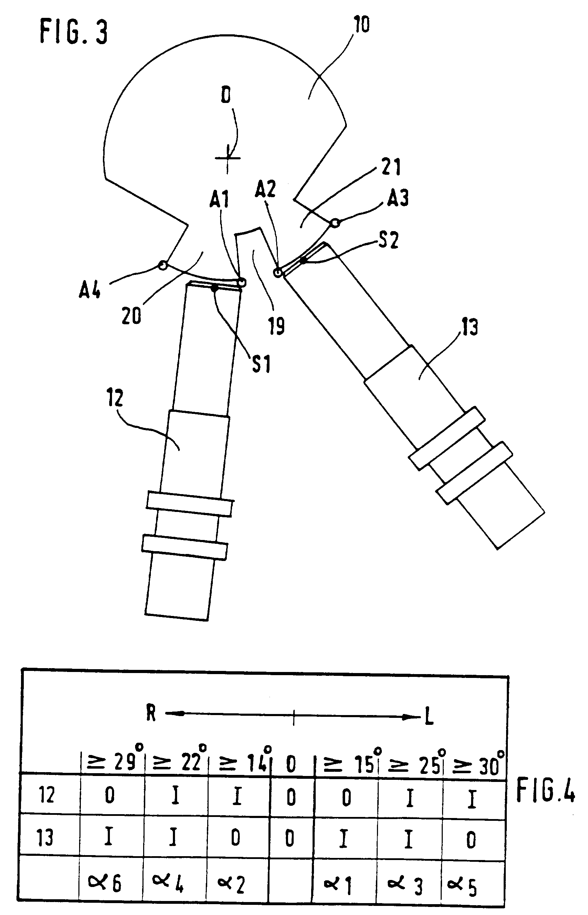

Der in Fig. 1 im Teilschnitt zu sehende Bereich ist Teil des oberen Schenkels 4 des gabelförmigen Endes der Achsbrücke 2. Zu sehen ist eine Sackbohrung 5, die vor allem der Lagerung eines Achsschenkelbolzens 6 dient. Der Achsschenkelbolzen 6 ist Bestandteil des Gelenkgehäuses 3 und dreht sich mit diesem um die Drehachse D. Der Achsschenkelbolzen 6 ist hierzu, wie aus Fig. 2 ersichtlich, über ein Kegelrollenlager 7 im oberen Schenkel 4 der Achsbrücke 2 abgestützt.

Auf der Seite der Achsbrücke 2, die der Vorwärtsfahrtrichtung F abgewandt ist, sind im oberen Schenkel 4 zwei Bohrungen 8 und 9 vorhanden. Die Bohrungen 8 und 9 liegen in einer Horizontalebene und sind radial zur Drehachse D gerichtet.

Unterschiedliche Lenkwinkel werden im Zusammenwirken eines Geberteils 10 mit einem Nehmerteil 11 und einer lediglich angedeuteten Auswerteeinrichtung 17 erfaßt.

Beim beschriebenen Ausführungsbeispiel der Erfindung wird das Geberteil vom Achsschenkelbolzen 6 selbst gebildet (Fig. 2). Das Nehmerteil 11 setzt sich aus zwei Sensoren 12 und 13 zusammen, die in die Bohrungen 8 und 9 eingeführt sind. Anschlußleitungen 14 und 15 sind gemeinsam in einem Kanal 16 der Achsbrücke 2 untergebracht und mit der Auswerteeinrichtung 17 verbunden.

Da die Sensoren 12 und 13 zu Montage- und Einstellzwecken zugänglich sein müssen, ist ein lösbarer Verschlußdeckel 18 vorgesehen, der die Sensoren 12 und 13 vor äußeren Einflüssen schützt. Aus der Schemazeichnung entsprechend Fig. 3 ist die weitere Ausgestaltung des Geberteils 10 und dessen Zusammenwirken mit dem aus den Sensoren 12 und 13 gebildeten Nehmerteil 11 ersichtlich.

Das Geberteil weist insgesamt vier Steuerkanten A1, A2, A3 und A4 auf. Die Steuerkanten A1 bis A4 definieren drei Sektoren des Geberteils 10, von denen der mittlere Sektor durch eine Nut 19 und die beiden benachbarten Sektoren durch Stege 20 und 21 gebildet werden. Um die Zuordnung der Steuerkanten A1 bis A4 zu den Sensoren 12 und 13 verständlich zu machen, sind die Schaltpunkte der Sensoren 12 und 13 mit S1 und S2 bezeichnet.

Zur Identifikation diskreter Lenkwinkel wirkt das Geberteil 10 mit den Steuerkanten A1 bis A4 mit den zwei Sensoren 12 und 13 als Nehmerteil 11 und ihren Schaltpunkten S1 zusammen. Die möglichen Schaltzustände der Sensoren sind mit I bzw. 0 bezeichnet. Die Fig. 4 enthält eine tabellarische Übersicht der Schaltzustände der Sensoren 12 und 13 in Abhängigkeit vorgegebener diskreter Lenkwinkel α1, α2, α3, α4, α5 und α6, wie sie beim Durchfahren einer Links- bzw. Rechtskurve auftreten. Anhand dieser Schaltzustände kann die Auswerteeinrichtung jeden der diskreten Lenkwinkel α1 bis α6 der Größe und Richtung nach identifizieren. Die im folgenden erwähnten bzw. aus der Tabelle entsprechend Fig. 4 ersichtlichen diskreten Lenkwinkel α1 bis α6 sind als Beispiele aufzufassen.

Beim Durchfahren einer Linkskurve treten diskrete Lenkwinkel α1, α3 und α5 von 15°, 25° und 30° auf. Erklärend sei hinzugefügt, daß das Geberteil 10 beim Durchfahren einer Linkskurve entgegen dem Uhrzeigersinn um die Drehachse D verdreht wird. α1 ist erreicht, wenn die Steuerkante A2 dem Schaltpunkt S2 gegenüberliegt. Bei α3 steht die Steuerkante A4 dem Schaltpunkt S1 gegenüber. Ein Lenkwinkel α5 von 30° wird angezeigt, wenn die Steuerkante A1 dem Schaltpunkt S2 des Sensors 13 gegenübersteht.

Beim Durchfahren einer Rechtskurve, bei dem das Geberteil 10 im Uhrzeigersinn um die Drehachse D verdreht wird, stellen sich folgende Verhältnisse ein:

Der Lenkwinkel α2 von 14° liegt vor, wenn die Steuerkante A1den Schaltpunkt S1 erreicht hat. α4, d. h. ein Lenkwinkel von 22°, bedeutet, daß die Steuerkante A3 dem Schaltpunkt S2 gegenüberliegt. Ein Lenkwinkel von 29°, d. h. α6, ist dann erreicht, wenn die Steuerkante A2 dem, Schaltpunkt S1 gegenüberliegt.

Die jeweiligen Schaltzustände der Sensoren 12 und 13, bezogen auf die angegebenen diskreten Lenkwinkel α1 bis α6, sind der Tabelle entsprechend Fig. 4 zu entnehmen.

Aus dem Zusammenwirken des Geberteils 10 mit den Sensoren 12 und 13 als Nehmerteil 11 wird ersichtlich, daß die diskreten Lenkwinkel α1 bis α6 auf einfache Art und Weise ggf. variiert werden können.

### Bezugszeichen

- 1: Achse
- 2: Achsbrücke
- 3: Gelenkgehäuse
- 4: oberer Schenkel
- 5: Sackbohrung
- 6: Achsschenkelbolzen
- 7: Kegelrollenlager
- 8: Bohrung
- 9: Bohrung
- 10: Geberteil
- 11: Nehmerteil
- 12: Sensor
- 13: Sensor
- 14: Anschlußleitung
- 15: Anschlußleitung
- 16: Kanal
- 17: Auswerteeinrichtung
- 18: Verschlußdeckel
- 19: Nut
- 20: Steg
- 21: Steg

## Patentansprüche

1. Vorrichtung zur Erfassung unterschiedlicher Lenkwinkel eines Rades einer Achse für ein Kraftfahrzeug mit einem Geberteil (10) mit Steuerkanten (A1 bis A4) und einem Nehmerteil (11) mit zwei Sensoren (12, 13), die mit den Steuerkanten des Geberteils zusammenwirken, um Schaltsignale bereitzustellen, durch die eine Auswerteeinrichtung (17) die Lenkwinkel (α1 bis α6) ihrer Größe und Richtung nach ermittelt, dadurch **gekennzeichnet**, daß die Steuerkanten (A1 bis A4) Schaltzustände (I, 0) der Sensoren (12, 13) herbeiführen, durch deren Kombinationen zumindest zwei diskrete Lenkwinkel (α1 bis α6) für jede Lenkrichtung des Rades, ausgehend von der Stellung für Geradeausfahrt, erkannt werden.

2. Vorrichtung nach Anspruch 1, dadurch **gekennzeichnet**, daß das Geberteil (10) vier Steuerkanten (A1 bis A4) aufweist, mit denen für jede Lenkrichtung des Rades drei diskrete Lenkwinkel (α1 bis α6) erkannt werden.

3. Vorrichtung nach den Ansprüchen 1 und 2, dadurch **gekennzeichnet**, daß das Geberteil (10) von einem Achsschenkelbolzen (6) gebildet ist.

4. Vorrichtung nach Anspruch 3, dadurch **gekennzeichnet**, daß die Sensoren (12, 13) radial zur Drehachse (D) des Achsschenkelbolzens (6) gerichtet verlaufen.

5. Vorrichtung nach den Ansprüchen 3 und 4, dadurch **gekennzeichnet**, daß die Sensoren in einer Ebene benachbart und einen Winkel miteinander einschließend in Bohrungen (8, 9) einer Achsbrücke (2) montiert sind.

6. Vorrichtung nach Anspruch 5, dadurch **gekennzeichnet**, daß Anschlußleitungen (14, 15) der Sensoren (12, 13) in einem gemeinsamen Kanal (16) der Achsbrücke (2) verlegt sind.

7. Vorrichtung nach den Ansprüchen 4 bis 6, dadurch **gekennzeichnet** , daß die Sensoren (12, 13) gegen äußere Einflüsse durch einen lösbaren Verschlußdekkel (18) geschützt sind.

8. Vorrichtung nach Anspruch 7, dadurch **gekennzeichnet**, daß die Sensoren (12, 13) auf der der Vorwärtsfahrtrichtung (F) abgewandten Seite der Achsbrücke (2) angeordnet sind.

9. Vorrichtung nach Anspruch 1, dadurch **gekennzeichnet**, daß das Geberteil (10) drei Sektoren (19, 20, 21) aufweist, wobei der mittlere Sektor durch eine Nut (19) gebildet wird.

## Claims

1. Device for detecting different steering angles of a wheel pertaining to an axle of a motor vehicle with a transmitter unit (10) with control edges (A1 to A4) and a receiver unit (11) with two sensors (12, 13) which interact with the control edges of the transmitter unit so as to provide switching signals by means of which an evaluation device (17) ascertains the steering angles (α1 to α6) in terms of their magnitude and direction, characterised in that the control edges (A1 to A4) bring about switching states (I, 0) of the sensors (12, 13), the combinations of which serve to detect at least two discrete steering angles (α1 to α6) for each steering direction of the wheel, starting from the position for travelling straight ahead.

2. Device according to Claim 1, characterised in that the transmitter unit (10) comprises four control edges (A1 to A4) serving to detect three discrete steering angles (α1 to α6) for each steering direction of the wheel.

3. Device according to Claims 1 and 2, characterised in that the transmitter unit (10) is constituted by a steering swivel pin (6).

4. Device according to Claim 3, characterised in that the sensors (12, 13) extend radially in relation to the axis of rotation (D) of the steering swivel pin (6).

5. Device according to Claims 3 and 4, characterised in that the sensors are mounted next to one another in one plane, including an angle in relation to one another, in bores (8,9) of an axle bracket (2).

6. Device according to Claim 5, characterised in that connecting lines (14, 15) of the sensors (12, 13) are installed in a common channel (16) of the axle bracket (2).

7. Device according to Claims 4 to 6, characterised in that the sensors (12, 13) are protected against external influences by means of a detachable sealing cover (18).

8. Device according to Claim 7, characterised in that the sensors (12, 13) are arranged on the side of the axle bracket (2) that faces away from the forward-travel direction (F).

9. Device according to Claim 1, characterised in that the transmitter unit (10) comprises three sectors (19, 20, 21), the middle sector being constituted by a groove (19).

## Revendications

1. Dispositif pour la saisie de différents angles de direction d'une roue d'un axe pour un véhicule automobile avec un moyeu transmetteur (10) avec des rampes de distribution (A1 à A4) et un moyeu récepteur (11) avec deux capteurs (12, 13) qui coopèrent avec les rampes de distribution du moyen transmetteur, pour fournir des signaux de commande, au moyen desquels un système d'exploitation (14) identifie la grandeur et la direction des angles de direction (α1 à α6), caractérisé en ce que les rampes de distribution (A1 a A4) entraînent la mise en route (λ, 0) des capteurs (12, 13) fournissant les combinaisons d'au moins deux angles de direction discrets (α1 à α6), pour chaque direction de roue, en commençant par la position pour la sortie en ligne droite.

2. Dispositif selon la revendication 1, caractérisé en ce que le moyeu transmetteur (10) présente quatre rampes de distribution (A1, A4), qui définissent trois angles de direction discrets (α1 à α6) pour chaque direction de la roue.

3. Dispositif selon les revendications 1 et 2, caractérisé en ce que le moyeu transmetteur (10) est formé par un axe pivot de fusée d'essieu (6).

4. Dispositif selon la revendication 3, caractérisé en ce que les capteurs (12, 13) sont disposés radialement par rapport à l'axe de rotation (D) de l'axe pivot de fusée d'essieu (6).

5. Dispositif selon les revendications 3 et 4, caractérisé en ce que les capteurs sont montés dans les alésages (8, 9) d'un pont d'essieu (2), dans un même plan et en formant entre eux un angle.

6. Dispositif selon la revendication 5, caractérisé en ce que les conduits de raccordement (14, 15) des capteurs (12, 13) sont transférées dans un conduit commun (16) du pont d'essieu (2).

7. Dispositif selon les revendications 4 à 6, caractérisé en ce que les capteurs (12, 13) sont protégés des influences extérieures par un couvercle de fermeture (18) escamotable.

8. Dispositif selon la revendication 7, caractérisé en ce que les capteurs (12, 13) sont disposés le long de la face du pont d'essieu (2) opposée à la direction de la marche avant (F).

9. Dispositif selon la revendication 1, caractérisé en ce que le moyeu transmetteur (10) montre trois secteurs (19, 20, 21) dont le secteur du milieu est en forme de gorge (19).
